# EUROPÄISCHE PATENTSCHRIFT

(11) **EP 2 923 569 B1**
(45) Veröffentlichungstag und Bekanntmachung des Hinweises auf die Patenterteilung: **28.11.2018**
(21) Anmeldenummer: 15401025.0
(22) Anmeldetag: 23.03.2015
(51) Int. Cl.: A01M 7/00

(54) **FELDSPRITZE UND VERFAHREN ZUM STEUERN EINER FELDSPRITZE**
FIELD SPRAYING DEVICE AND METHOD FOR OPERATING SAME
PULVÉRISATEUR À CULTURES ET PROCÉDÉ DE COMMANDE D'UN PULVÉRISATEUR À CULTURES

(30) Priorität: 25.03.2014 DE 102014104068
(43) Veröffentlichungstag der Anmeldung: 30.09.2015
(73) Patentinhaber: Amazonen-Werke H. Dreyer GmbH & Co. KG, 49205 Hasbergen (DE)
(72) Erfinder: Kiefer, Stefan, 49074 Osnabrück (DE); Wernsmann, Daniel, 49577 Ankum (DE); Kühn, Christoph, 49824 Ringe (DE)

(56) Entgegenhaltungen:
- EP-A1- 0 726 024
- WO-A1-97/12688
- CA-A1- 2 517 297
- DE-U1-202008 015 418
- US-A- 5 987 383

## Beschreibung

Die Erfindung betrifft eine Feldspritze gemäß Oberbegriff des Anspruchs 5 und ein Verfahren zum Steuern einer Feldspritze beim Befahren von Fahrgassen eines Felds, gemäß Oberbegriff des Anspruchs 1, wie bekannt aus der US 5 987 383 A.

Die Arbeitsbreite einer Feldspritze wird üblicherweise durch die Breite einer quer zur Fahrtrichtung der Feldspritze ausgerichteten Düsenreihe vorgegeben. Die Sprühkegel einzelner Düsen überlappen hierbei, um Spritzmittel möglichst gleichförmig über die Arbeitsbreite zu verteilen. Der Abstand zwischen benachbarten Fahrgassen entspricht im Idealfall der effektiven Arbeitsbreite der Feldspritze. Diese ist so definiert, dass sich beim lückenlosen seitlichen Aneinanderreihen der effektiven Arbeitsbreite die von den Düsen vorgegebene Querverteilung des Spritzmittels im Wesentlichen auch im Übergangsbereich benachbarter Bearbeitungsbereiche ergibt.

Aus der EP 0 726 024 A1 ist es bekannt, für Dosierorgane einer Feldspritze Positionen zur Einschaltung, Abschaltung und Einstellung auf einem Acker rechnergestützt zu speichern. In Verbindung mit einem GPS-Positionsgeber zur Erzeugung von Feldkoordinatensystemen werden die Dosierorgane dann gezielt ein- oder ausgeschaltet.

Aus der DE 10 2009 005 601 A1 ist es ferner bekannt, den Abstand zwischen benachbarten Fahrgassen mittels Satellitennavigation beim Ausbringen von Saatgut oder dergleichen an eine vorgegebene effektive Arbeitsbreite anzupassen. Der tatsächliche Verlauf derart angelegter Fahrgassen kann jedoch nichtsdestoweniger von dem geplanten Verlauf der Fahrgassen abweichen. Solche Fehler können sich zudem bei einer Vielzahl nebeneinander angelegter Fahrgassen addieren. Bei zu dicht aneinander angelegten Fahrgassen überlappen dann beim späteren Ausbringen von Spritzmitteln benachbarte Bearbeitungsbereiche mit der Folge einer unerwünschten Überdosierung. Bei zu weit voneinander entfernt angelegten Fahrgassen bleiben dagegen Streifen zwischen den von der Arbeitsbreite abgedeckten Feldbereichen unbearbeitet.

Aus der DE 20 2008 015 418 U1 ist ferner eine Feldspritze mit Zusatzspritzdüsen bekannt, die an den Enden eines linken und eines rechten Gestänges mit je einer Düsenreihe angeordnet sind, um sowohl im Bereich der Fahrgasse als auch an den äußeren seitlichen Rändern des Arbeitsbereichs Spezialspritzmittel oder dergleichen auszubringen. Ebenso lässt sich mit sämtlichen Spritzdüsen dasselbe Spritzmittel ausbringen, wobei die Zusatzdüsen dann von Hand zugeschaltet werden können, um den Arbeitsbereich der Feldspritze je nach Bedarf seitlich zu erweitern.

Nachteilig hierbei ist, dass die Zusatzdüsen dann auf beiden Seiten der Feldspritze zugeschaltet werden, und dass sich die gewünschte Bearbeitungsqualität durch manuelles Schalten nicht zuverlässig erzielen lässt. Im Bereich von Bearbeitungslücken droht dann eine Unterdosierung. Durch das beidseitige Zuschalten der Zusatzspritzdüsen werden außerdem Feldbereiche von den Zusatzspritzdüsen besprüht, die beim Befahren der nächsten Fahrgasse nochmals besprüht werden mit der Folge einer unerwünschten Überdosierung des Spritzmittels.

Es besteht somit der Bedarf für in dieser Hinsicht verbesserte Feldspritzen und Verfahren zum Steuern der Feldspritzen.

Die gestellte Aufgabe wird mit einem Verfahren zum Steuern einer Feldspritze beim Befahren von Fahrgassen eines Felds gemäß Anspruch 1 gelöst. Demnach wird ein seitlicher Anschlussabstand des Arbeitsbereichs der Feldspritze zu bereits bearbeiteten Feldbereichen mittels Satellitennavigation überwacht. Ferner werden Zusatzspritzdüsen, die den Arbeitsbereich seitlich erweitern, automatisch und selektiv zugeschaltet, falls am zugehörigen seitlichen Ende des Arbeitsbereichs weder der festgestellte Anschlussabstand einen vorgegebenen Schwellenwert übersteigt, noch der Arbeitsbereich mit einem bereits bearbeiteten Feldbereich überlappt oder lückenlos an diesen anschließt.

Somit lassen sich Bearbeitungslücken beim Anschlussfahren entlang benachbarter Fahrgassen vermeiden. Dadurch, dass die Zusatzspritzdüsen nicht zugeschaltet werden, falls der Arbeitsbereich mit einem bereits bearbeiteten Feldbereich überlappt, lässt sich eine Überdosierung durch wiederholtes Besprühen eines Feldabschnitts beim Anschlussfahren minimieren. Die Breite des erfindungsgemäßen Arbeitsbereichs entspricht der effektiven Arbeitsbreite der Feldspritze.

Durch Vergleich des festgestellten Anschlussabstands mit dem Schwellenwert lässt sich automatisch erkennen, ob im Bereich der Zusatzspritzdüsen eine bereits bearbeitete Anschlussfläche existiert. Der Schwellenwert wird dann derart vorgegeben, dass bei dessen Überschreiten davon ausgegangen werden kann, dass sich kein bereits bearbeiteter Feldbereich seitlich anschließt. Dadurch, dass die Zusatzspritzdüsen selektiv nur dann zugeschaltet werden, falls der Anschlussabstand den vorgegebenen Schwellenwert nicht übersteigt, lässt sich eine drohende Bearbeitungslücke automatisch schließen.

Vorzugsweise ist der Schwellenwert nicht größer als die Breite eines von den Zusatzspritzdüsen jeweils auf einer Seite der Feldspritze zusätzlich abgedeckten Erweiterungsbereichs. Damit lässt sich eine drohende Bearbeitungslücke zu einer bereits bearbeiteten Anschlussfläche zuverlässig schließen.

Vorzugsweise beträgt der Schwellenwert des Abschlussabstands 0,2 bis 0,8 m, insbesondere 0,4 bis 0,6 m. Damit lässt sich das Vorhandensein einer seitlichen Anschlussfläche innerhalb der in der Praxis vorkommenden Ungenauigkeiten beim Anlegen von Fahrgassen erkennen, auch für den Fall, dass sich die Ungenauigkeiten über mehrere nebeneinander liegende Fahrgassen auf ungünstige Weise addieren.

Beispielsweise beträgt eine zu erwartende seitliche Ist-Abweichung von Fahrspuren beim Anlegen mittels Satellitennavigation etwa 0,05 m. Liegen beispielsweise zehn Fahrgassen nebeneinander, so wäre mit einer größtmöglichen Ist-Abweichung einzelner Fahrspuren von 0,5 m zu rechnen.

Vorzugsweise werden die Zusatzspritzdüsen wahlweise auf der linken oder der rechten Seite der Feldspritze derart zugeschaltet, dass eine drohende Bearbeitungslücke zu einem beim Befahren einer benachbarten Fahrgasse bereits bearbeiteten Feldbereich geschlossen wird. Somit lässt sich eine vorgegebene Bearbeitungsqualität beim Ausbringen von Spritzmitteln durch lückenloses Aneinanderschließen von Bearbeitungsflächen einhalten und gleichzeitig die Gefahr einer Überdosierung in einem noch unbearbeiteten Feldbereich auf der jeweils gegenüberliegenden Seite der Feldspritze minimieren.

Die gestellte Aufgabe wird ebenso mit einer Feldspritze nach Anspruch 5 gelöst. Demnach umfasst diese: ein Satellitennavigationssystem zur Positionsüberwachung der Feldspritze; eine Düsenreihe, die den seitlichen Arbeitsbereich der Feldspritze vorgibt; zuschaltbare Zusatzspritzdüsen, die den seitlichen Arbeitsbereich um einen linken und einen rechten Erweiterungsbereich erweitern; und eine Steuereinheit, mit der sich die Zusatzspritzdüsen des rechten und linken Erweiterungsbereichs in Abhängigkeit von Daten der Positionsüberwachung getrennt voneinander zuschalten/wegschalten lassen. Somit lassen sich die Zusatzspritzdüsen gezielt nur dort zuschalten, wo Bearbeitungslücken drohen. Entsprechend lässt sich das mehrmalige Besprühen von Feldbereichen, in denen zunächst keine Bearbeitungslücken zu erwarten sind, weitgehend vermeiden.

Vorzugsweise ist die Steuereinheit ausgebildet, die Zusatzspritzdüsen in Abhängigkeit von einem Vergleich aktueller Positionsdaten des Arbeitsbereichs mit abgespeicherten Positionsdaten bereits bearbeiteter Feldbereiche anzusteuern. Insbesondere werden diejenigen Feldbereiche, die der Arbeitsbereich der Feldspritze beim Befahren von Fahrgassen bereits überstrichen hat, als bearbeitet im Sinne einer Bearbeitungskarte des Felds abgespeichert. Aktuelle und abgespeicherte Positionsdaten stammen aus derselben Behandlungsmaßnahme, die beispielsweise dadurch definiert ist, dass alle Feldbereiche im Rahmen der Maßnahme einmal befahren / behandelt werden.

Somit wird die relative Ist-Position des Arbeitsbereichs bezüglich bereits befahrener Fahrspuren und/oder der daraus resultierenden bearbeiteten Feldbereiche ermittelt. Die Ansteuerung der Zusatzspritzdüsen erfolgt dann selektiv, falls eine Bearbeitungslücke zwischen dem Arbeitsbereich in seiner Ist-Position und einer bereits bearbeiteten Anschlussfläche droht.

Vorzugsweise setzt sich der Arbeitsbereich der Feldspritze aus mehreren einzeln zuschaltbaren Teilarbeitsbreiten zusammen, und der linke und rechte Erweiterungsbereich ist jeweils schmäler als die einzelnen Teilarbeitsbreiten. Die Breite des Erweiterungsbereichs wird dann vorzugsweise gezielt an die Breite zu erwartender Bearbeitungslücken angepasst.

Vorzugsweise umfasst die Düsenreihe eine Vielzahl gleichartiger Spritzdüsen, und die Zusatzspritzdüsen unterscheiden sich davon hinsichtlich Richtcharakteristik und/oder Ausrichtung. Somit lassen sich die Zusatzspritzdüsen gezielt an einen benötigten Erweiterungsbereich anpassen.

Vorzugsweise ist der von den Zusatzspritzdüsen abgedeckte linke/rechte Erweiterungsbereich 0,2 bis 0,8 m breit, insbesondere 0,4 bis 0,6 m.

Eine bevorzugte Ausführungsform des erfindungsgemäßen Verfahrens ist in der Zeichnung dargestellt. Es zeigen:
- Fig. 1: eine schematische Draufsicht auf eine Feldspritze beim Anschlussfahren auf einem Feld; und
- Fig. 2: eine Vorderansicht auf die einander entgegengesetzten seitlichen Enden des Arbeitsbereichs der Feldspritze.

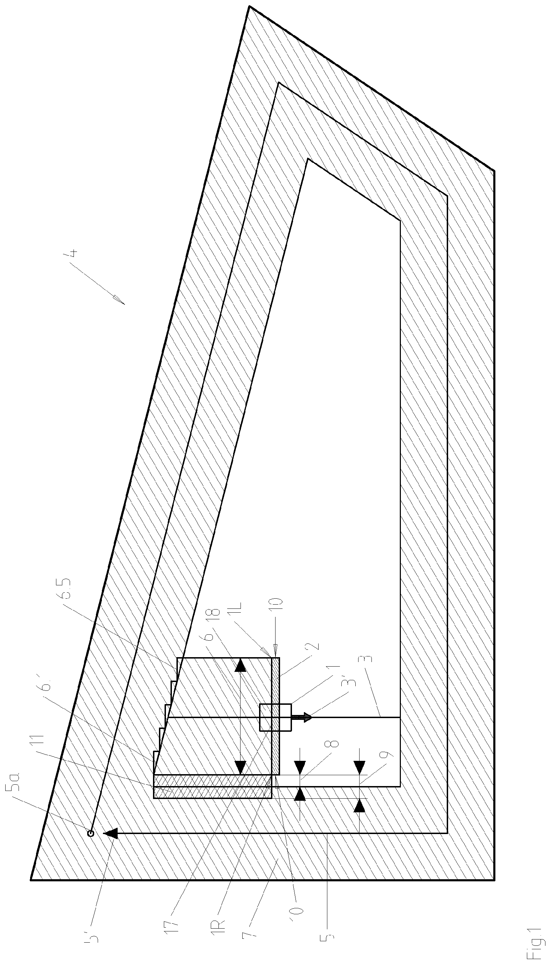

Die Fig. 1 zeigt eine Feldspritze 1 mit ihrem Arbeitsbereich 2 beim Befahren einer Fahrgasse 3, die auf einem Feld 4 neben einer bereits von der Feldspritze 1 zuvor befahrenen Fahrgasse 5 angelegt ist. Die Breite des Arbeitsbereichs 2 entspricht im Wesentlichen der effektiven Arbeitsbreite 6 der Feldspritze 1. Ein bereits bearbeiteter Feldbereich 7 ist in der Fig. 1 als solcher gekennzeichnet. Nach gängiger Definition zeigt die Fig. 1 ein Anschlussfahren der Feldspritze 1 entlang der Fahrgasse 3 im Anschluss an die zuvor befahrene Fahrgasse 5. Im Beispiel ist der Abstand zwischen den Fahrgassen 3, 5 in Folge einer Ungenauigkeit / Abweichung beim Anlegen der Fahrgassen 3, 5 größer als die Breite des Arbeitsbereichs 2 der Feldspritze 1. Daher existiert ein seitlicher Anschlussabstand 8 im Sinne einer drohenden Bearbeitungslücke zwischen dem in Fahrtrichtung 3' rechten Ende des Arbeitsbereichs 2 und dem benachbarten bereits bearbeiteten Feldbereich 7.

Mittels Satellitennavigation wird die Ist-Position des Arbeitsbereichs 2 überwacht und mit Positionsdaten bereits bearbeiteter Feldbereiche 7 verglichen, um Anschlussabstände des Arbeitsbereichs 2 zu den bearbeiteten Feldbereichen 7 zu ermitteln. Liegt der seitliche Abschlussabstand 8 auf der rechten Seite 1R oder der linken Seite 1L der Feldspritze 1 unterhalb eines vorgegebenen Schwellenwerts 9, wird wenigstens eine den Arbeitsbereich 2 seitlich erweiternde Zusatzspritzdüse 10 automatisch und selektiv zugeschaltet.

Im Beispiel der Fig. 1 ist diese Bedingung nur auf der rechten Seite 1R der Feldspritze 1 erfüllt, nicht jedoch auf der linken Seite 1L der Feldspritze 1. Folglich wird nur auf der rechten Seite 1R wenigstens eine Zusatzspritzdüse 10 zugeschaltet und der Arbeitsbereich 2 dort seitlich um einen Erweiterungsbereich 11 ergänzt. Letzterer ist breiter als der festgestellte Anschlussabstand 8, so dass eine vor der Feldspritze 1 im Anschluss an den benachbarten bearbeiteten Feldbereich 7 drohende Bearbeitungslücke geschlossen wird.

Die Fig. 1 deutet ferner an, dass die Arbeitsbreite 6 der Feldspritze 1 aus mehreren Teilarbeitsbreiten 6.1 bis 6.5 besteht. Diese lassen sich gezielt einzeln zuschalten und sind vorzugsweise jeweils breiter als der Erweiterungsbereich 11. Die Teilarbeitsbreiten 6.1 bis 6.5 werden in an sich bekannter Weise zugeschaltet, um im regulären Betrieb der Feldspritze 1 einen möglichst lückenlosen und überlappungsarmen nicht-orthogonalen Anschluss an bereits bearbeitete Feldbereiche 7 zu gewährleisten.

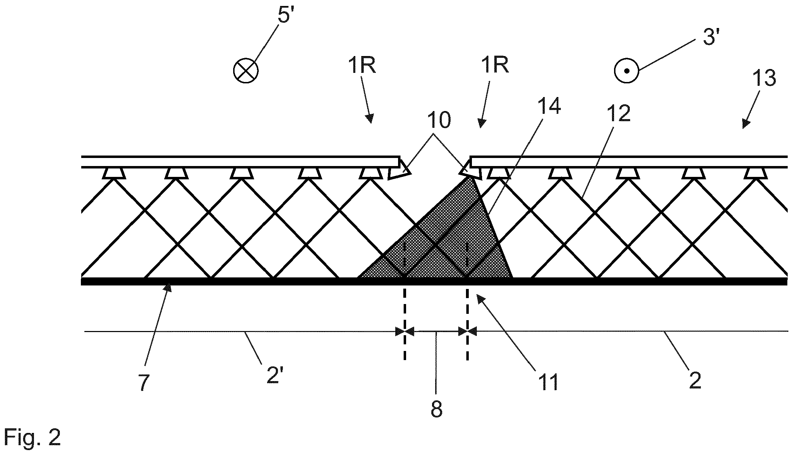

Die Fig. 2 zeigt in Anlehnung an die Fig. 1 ein unvollständiges Überlappen des aktuellen Arbeitsbereichs 2 auf der rechten Seite 1R der Feldspritze 1 mit einer vorangegangenen Position 2' des Arbeitsbereichs beim Anschlussfahren entlang der Fahrgasse 3. Auf der linken Seite der Fig. 2 ist die Fahrtrichtung 5' entlang der zuvor befahrenen Fahrgasse 5 in die Zeichenebene hinein dargestellt, und auf der rechten Seite der Fig. 2 die Fahrtrichtung 3' beim Anschlussfahren entlang der Fahrgasse 3 aus der Zeichenebene heraus.

Demnach setzt sich der seitliche Arbeitsbereich 2 aus einer Vielzahl von Sprühkegeln 12 einer Düsenreihe 13 zusammen. Angedeutet ist ferner die Zusatzspritzdüse 10, die beim Anschlussfahren in Fahrtrichtung 3' erfindungsgemäß zugeschaltet ist. Der Sprühkegel 14 der Zusatzspritzdüse 10 weicht vorzugsweise hinsichtlich seiner Richtcharakteristik und/oder seiner Ausrichtung von den Sprühkegeln 12 der Düsenreihe 13 ab, um den Erweiterungsbereich 11 möglichst zielgerichtet und lückenlos an den Arbeitsbereich 2 der Feldspritze 1 anzuschließen. Der seitliche Anschlussabstand 8 wird sinngemäß als Lücke zwischen aktueller und früherer Position des Arbeitsbereichs 2 verstanden.

Die effektive Breite des Erweiterungsbereichs 11 richtet beispielsweise sich nach der Breite jeweils zu erwartender Bearbeitungslücken beim Anschlussfahren. In der Regel ist dafür der Sprühkegel 14 einer einzelnen Zusatzspritzdüse 10 ausreichend. Es können aber auch mehrere Zusatzspritzdüsen 10 mit gleichartigen und/oder unterschiedlichen Sprühkegeln 14 vorhanden sein, die sich alternativ oder in Kombination miteinander zuschalten lassen, um einen für eine bestimmte Anforderung vorteilhaften Erweiterungsbereich 11 auszubilden.

Der Schwellenwert 9 lässt sich beliebig vorgeben, um das Vorhandensein einer seitlichen Anschlussfläche im Rahmen zu erwartender Abweichungen des Ist-Verlaufs von Fahrgassen zu erkennen. Ebenso lässt sich der Schwellenwert 9 an den effektiv abgedeckten Erweiterungsbereich 11 anpassen oder umgekehrt. Praxistauglich sind beispielweise Erweiterungsbereiche 11 von 0,2 bis 0,8 m, insbesondere ein Bereich von 0,4 bis 0,6 m. Damit lassen sich die beim Anlegen von Fahrgassen mittels Satellitennavigation auch in der Summe über mehrere Fahrgassen entstehende Ungenauigkeiten / Abweichungen von der Ideallinie in der Regel kompensieren.

Der Schwellenwert 9 dient insbesondere dazu, den im Beispiel auf der rechten Seite 1R der Feldspritze 1 angedeuteten bearbeiteten Feldbereich 7 als relevant für das Anschlussfahren und die Steuerung der Zusatzspritzdüse 10 zu erkennen und von den bearbeiteten Feldbereichen zur linken Seite 1L der Feldspritze 1 zu unterscheiden, die so weit entfernt sind, dass sie für das Anschlussfahren nicht relevant sind, so dass die zugehörige Spritzdüse 10 abgeschaltet bleibt.

Für die selektive automatische Zuschaltung der Zusatzspritzdüsen 10 wird ferner überprüft, ob der seitliche Arbeitsbereich 2 lückenlos an einen benachbarten, bereits bearbeiteten Feldbereich 7 (in der Fig. 2 an die vorangegangene Position 2') anschließt oder mit diesem seitlich überlappt. Ist dies der Fall, bleibt die zugeordnete Zusatzspritzdüse 10 abgeschaltet. Dies entspricht einem ordnungsgemäßen Anschlussfahren entlang benachbarter Fahrgassen. Entsprechend lässt sich Überdosierung des auszubringenden Spritzmittels automatisch minimieren.

Die Positionsbestimmung zur Navigation der Feldspritze 1 erfolgt mit einem an sich bekannten Satellitennavigationssystem 17 (GPS, DGPS). Für das Zuschalten / Abschalten der Zusatzspritzdüsen 10 ist eine vorzugsweise in einen Bordcomputer der Feldspritze 1 oder dergleichen integrierte Steuereinheit 18 vorhanden, mit der sich beispielsweise auch die Düsenreihe 13 ansteuern lässt. Mit Hilfe des Satellitennavigationssystems 17 wird die Ist-Position des Arbeitsbereichs 2 laufend überwacht. In der Steuereinheit 18 werden die festgestellten Ist-Positionsdaten des Arbeitsbereichs 2 beim Ausbringen von Spritzmittel ferner gespeichert, um die Lage der mit dem Arbeitsbereich 2 bei der Bearbeitung tatsächlich bereits überstrichenen Feldbereiche im Sinne einer Bearbeitungskarte des Felds vorzuhalten.

Anhand der Ist-Position und Bewegungsrichtung des Arbeitsbereichs 2 relativ zu den Koordinaten der im Rahmen derselben Behandlungsmaßnahme bereits bearbeiteten Feldbereiche lässt sich dann feststellen, ob der Anschlussabstand 8 auf der rechten Seite 1R und/oder auf der linken Seite 1L der Feldspritze 1 innerhalb des vorgegebenen Schwellenwerts 9 liegt, und ob der Arbeitsbereich 2 der bereits bearbeitete Feldbereich 7 in der Draufsicht aneinander stoßen / überlappen. Der Schwellenwert 9 für den Anschlussabstand 8 lässt sich mit der Steuereinheit 18 dann beispielweise je nach vorgefundener Bearbeitungssituation festlegen und/oder an den von der Zusatzspritzdüse 10 abgedeckten Erweiterungsbereich 11 anpassen.

Erfindungsgemäß lässt sich in Anlehnung an die Fig. 1 beispielsweise wie folgt vorgehen:
Zuerst wird die äußere Fahrgasse 5 ausgehend vom Startpunkt 5a befahren. Hierbei wird die Position des Arbeitsbereichs 2 und damit der von diesem überstrichene Feldbereich 7 mittels Satellitennavigation laufend überwacht. Die zugehörigen Positionsdaten werden abgespeichert und im Sinne einer Bearbeitungskarte als bereits bearbeitete Feldbereiche 7 in der Steuereinrichtung 18 hinterlegt.

Beim darauf folgenden Anschlussfahren der Feldspritze entlang der Fahrspur 3 wird ebenso die aktuelle Position des Arbeitsbereichs 2 mittels Satellitennavigation überwacht und mit der abgelegten Karte bzw. den Positionsdaten der bereits bearbeiteten Feldbereiche 7 verglichen. Beispielsweise wird dabei gemäß Fig. 1 ein Anschlussabstand 8 auf der rechten Seite 1R der Feldspritze 1 festgestellt, der kleiner ist als der vorgegebene Schwellenwert 9. Da außerdem der Arbeitsbereich 2 und der bereits bearbeitete Feldbereich 7 nicht aneinander stoßen oder überlappen, wird die Zusatzspritzdüse 10 auf der rechten Seite 1R der Feldspritze 1 gezielt und automatisch zugeschaltet, solange diese Bedingung erfüllt ist. Damit wird eine auf der rechten Seite 1R der Feldspritze 1 drohende Bearbeitungslücke geschlossen.

Auf der linken Seite 1L der Feldspritze 1 liegt der (nicht mit Bezugszeichen versehene) Anschlussabstand über dem vorgegebenen Schwellenwert 9, so dass die Zusatzspritzdüse 10 auf der linken Seite 1L der Feldspritze 1 nicht zugeschaltet wird. Erfindungsgemäß wird somit unterschieden, ob die Seiten 1R, 1L an einen bereits bearbeiteten Feldbereich 7 direkt anschließen oder nicht. Ferner wird überprüft, ob überhaupt eine Bearbeitungslücke zu einem benachbarten bearbeiteten Feldbereich 7 droht. Nur in diesem Fall wird die zugehörige Zusatzspritzdüse 10 gezielt zugeschaltet. Sobald eine dieser Bedingungen nicht erfüllt ist, wird die jeweilige Zusatzspritzdüse 10 wieder abgeschaltet. Somit lässt sich eine Überdosierung verhindern oder zumindest weitgehend reduzieren.

Hierbei sind die Zusatzspritzdüsen 10 speziell für das Erweitern des seitlichen Arbeitsbereichs 2 um den Erweiterungsbereich 11 optimiert. Die Düsenreihe 13 lässt sich demgegenüber in gewohnter Weise nach Teilarbeitsteilbreiten 6.1 bis 6.5 gesondert schalten, insbesondere unabhängig von dem Zuschalten der Zusatzspritzdüsen 10.

Hierbei sind die dargestellten Größenverhältnisse nicht maßstäblich und die Anzahl und Arbeitsbereiche der dargestellten Spritzdüsen und die Teilarbeitsbreiten lediglich beispielhaft. Die Zusatzspritzdüsen 10 lassen sich im Rahmen der erfindungsgemäßen Steuerung in beliebiger Weise schalten, öffnen, drosseln oder dergleichen, um eine gezielte Dosierung beim Anschlussfahren im obigen Sinne zu erzielen.

## Patentansprüche

1. Verfahren zum Steuern einer Feldspritze (1) beim Befahren von Fahrgassen (3) eines Felds (4),
wobei ein seitlicher Anschlussabstand (8) des Arbeitsbereichs (2) der Feldspritze (1) zu bereits bearbeiteten Feldbereichen (7) mittels Satellitennavigation überwacht wird,
**dadurch gekennzeichnet, dass**
Zusatzspritzdüsen (10), die den Arbeitsbereich (2) seitlich erweitern, automatisch und selektiv zugeschaltet werden, falls am zugehörigen seitlichen Ende des Arbeitsbereichs weder der Anschlussabstand (8) einen vorgegebenen Schwellenwert (9) übersteigt noch der Arbeitsbereich (2) und der bereits bearbeitete Feldbereich (7) seitlich überlappen oder aneinander stoßen.

2. Verfahren nach Anspruch 1, wobei der Schwellenwert (9) nicht größer ist als die Breite eines von den Zusatzspritzdüsen (10) jeweils auf einer Seite (1L, 1R) der Feldspritze (1) zusätzlich abgedeckten Erweiterungsbereichs (11).

3. Verfahren nach Anspruch 1 oder 2, wobei der Schwellenwert (9) 0,2 bis 0,8 m beträgt, insbesondere 0,4 bis 0,6 m.

4. Verfahren nach einem der vorigen Ansprüche, wobei die Zusatzspritzdüsen (10) wahlweise auf der linken oder der rechten Seite (1L, 1R) der Feldspritze (1) derart zugeschaltet werden, dass eine drohende Bearbeitungslücke zu einem beim Befahren einer benachbarten Fahrgasse (5) bearbeiteten Feldbereich (7) geschlossen wird.

5. Feldspritze (1), mit:
- einem Satellitennavigationssystem (17) zur Positionsüberwachung der Feldspritze (1);
- einer Düsenreihe (13), die den Arbeitsbereich (2) der Feldspritze (1) in seitlicher Richtung vorgibt;
**gekennzeichnet durch**
- zuschaltbare Zusatzspritzdüsen (10), die den Arbeitsbereich (2) um einen linken und einen rechten Erweiterungsbereich (11) seitlich erweitern; und
- eine zur Durchführung des Verfahrens nach Anspruch 1 ausgelegte Steuereinheit (18), mit der sich die Zusatzspritzdüsen (10) des rechten und linken Erweiterungsbereichs (11) in Abhängigkeit von Daten der Positionsüberwachung getrennt voneinander zuschalten / abschalten lassen.

6. Feldspritze nach Anspruch 5, wobei die Steuereinheit (18) ausgebildet ist, die Zusatzspritzdüsen (10) in Abhängigkeit von einem Vergleich aktueller Ist-Positionsdaten des Arbeitsbereichs (2) mit abgespeicherten Ist-Positionsdaten bereits bearbeiteter Feldbereiche (7) anzusteuern.

7. Feldspritze nach Anspruch 5 oder 6, wobei sich der Arbeitsbereich (2) der Feldspritze (1) aus mehreren einzeln zuschaltbaren Teilarbeitsbreiten (6.1-6.5) zusammensetzt und der linke und rechte Erweiterungsbereich (11) jeweils schmäler ist als die einzelnen Teilarbeitsbreiten (6.1-6.5).

8. Feldspritze nach einem der Ansprüche 5 bis 7, wobei die Düsenreihe (13) eine Vielzahl gleichartiger Spritzdüsen umfasst und sich die Zusatzspritzdüsen (10) davon hinsichtlich Richtcharakteristik und/oder Ausrichtung unterscheiden.

9. Feldspritze nach wenigstens einem der Ansprüche 5 bis 8, wobei der von den Zusatzspritzdüsen (10) abgedeckte linke / rechte Erweiterungsbereich (11) 0,2 bis 0,8 m breit ist, insbesondere 0,4 bis 0,6 m.

## Claims

1. Method for controlling a field spraying device (1) as it travels on lanes (3) of a field (4),
a lateral connecting distance (8) of the working region (2) of the field spraying device (1) to already processed field regions (7) being monitored by means of satellite navigation,
**characterized in that**
additional spray nozzles (10) which widen the working region (2) laterally are connected up automatically and selectively if, at the associated lateral end of the working region, neither the connecting distance (8) exceeds a predefined threshold value (9) nor the working region (2) and the already processed field region (7) overlap laterally or abut one another.

2. Method according to Claim 1, wherein the threshold value (9) is no greater than the width of an extension region (11) additionally covered by the additional spray nozzles (10) respectively on one side (1L, 1R) of the field spraying device (1).

3. Method according to Claim 1 or 2, wherein the threshold value (9) is 0.2 to 0.8 m, in particular 0.4 to 0.6 m.

4. Method according to one of the preceding claims, wherein the additional spray nozzles (10) optionally on the left-hand or the right-hand side (1L, 1R) of the field spraying device (1) are connected up in such a way that an impending processing gap to a field region (7) processed when travelling on an adjacent lane (5) is closed.

5. Field spraying device (1), having:
- a satellite navigation system (17) for monitoring the position of the field spraying device (1);
- a row of nozzles (13), which predefine the working region (2) of the field spraying device (1) in the lateral direction;
**characterized by**
- additional spray nozzles (10) which can be connected up and which the working region (2) widen laterally by a left-hand and a right-hand extension region (11); and
- a control unit (18) designed to carry out the method according to Claim 1, with which the additional spray nozzles (10) of the right-hand and left-hand extension region (11) can be connected up/disconnected separately from one another, depending on data from the position monitoring.

6. Field spraying device according to Claim 5, wherein the control unit (18) is designed to activate the additional spray nozzles (10) depending on a comparison of up-to-date current position data of the working region (2) with stored current position data of already processed field regions (7).

7. Field spraying device according to Claim 5 or 6, wherein the working region (2) of the field spraying device (1) is composed of multiple partial working widths (6.1-6.5) that can be connected up individually, and the left-hand and right-hand extension region (11) is respectively narrower than the individual partial working widths (6.1-6.5).

8. Field spraying device according to one of Claims 5 to 7, wherein the row of nozzles (13) comprises a multiplicity of identical spray nozzles and the additional spray nozzles (10) differ therefrom with regard to directional characteristic and/or alignment.

9. Field spraying device according to at least one of Claims 5 to 8, wherein the left-hand/right-hand extension region (11) covered by the additional spray nozzles (10) is 0.2 to 0.8 m wide, in particular 0.4 to 0.6 m.

## Revendications

1. Procédé de commande d'un pulvérisateur de champ (1) lors du passage sur des voies de roulement (3) d'un champ (4),
une distance de raccordement latérale (8) de la zone de travail (2) du pulvérisateur de champ (1) par rapport à des zones de champ déjà traitées (7) étant surveillée par GPS,
**caractérisé en ce que**
des buses de pulvérisation supplémentaires (10), qui étendent latéralement la zone de travail (2), sont activées automatiquement et sélectivement lorsque, à l'extrémité latérale associée de la zone de travail, la distance de raccordement (8) ne dépasse pas une valeur de seuil prédéterminée (9) et la zone de travail (2) et la zone de champ déjà traitée (7) ne se chevauchent pas latéralement ou ne s'aboutent pas.

2. Procédé selon la revendication 1, dans lequel la valeur de seuil (9) n'est pas supérieure à la largeur d'une zone d'extension (11) couverte en plus par les buses de pulvérisation supplémentaires (10) à chaque fois sur un côté (1L, 1R) du pulvérisateur de champ (1) .

3. Procédé selon la revendication 1 ou 2, dans lequel la valeur de seuil (9) va de 0,2 à 0,8 m, en particulier de 0,4 à 0,6 m.

4. Procédé selon l'une des revendications précédentes, dans lequel les buses de pulvérisation supplémentaire(10) sont activées du côté gauche ou du côté droit (1L, 1R) du pulvérisateur de champ (1) de telle sorte qu'un vide de traitement imminent par rapport à une zone de terrain (7), traitée lors du passage sur une voie de roulement adjacente (5), est fermé.

5. Pulvérisateur de champ (1) comprenant :
- un système de navigation par satellite (17) destiné à surveiller la position du pulvérisateur de champ (1) ;
- une rangée de buses (13) qui définit la zone de travail (2) du pulvérisateur de champ (1) dans la direction latérale ;
**caractérisé par**
- des buses de pulvérisation supplémentaires (10) commutables qui élargissent latéralement la zone de travail (2) d'une zone d'extension gauche et d'une zone d'extension droite (11) ; et
- une unité de commande (18) conçue pour mettre en oeuvre le procédé selon la revendication 1 et au moyen de laquelle les buses de pulvérisation supplémentaires (10) des zones d'extension droite et gauche (11) peuvent être activées/désactivées séparément en fonction de données de la surveillance de position.

6. Pulvérisateur de champ selon la revendication 5, dans lequel l'unité de commande (18) est conçue pour commander les buses de pulvérisation supplémentaires (10) en fonction d'une comparaison de données de position réelle actuelles de la zone de travail (2) avec des données de position réelle mémorisées de la zone de champ déjà traitée (7).

7. Pulvérisateur de champ selon la revendication 5 ou 6, dans lequel la zone de travail (2) du pulvérisateur de champ (1) se compose de plusieurs largeurs de travail partielles (6.1 à 6.5) activables individuellement et la zone d'extension gauche et droite (11) est à chaque fois plus petite que les largeurs de travail partielles (6.1 à 6.5).

8. Pulvérisateur de champ selon l'une des revendications 5 à 7, dans lequel la rangée de buses (13) comprend une pluralité de buses de pulvérisation analogues et les buses de pulvérisation supplémentaires (10) se distinguent de celles-ci en termes de caractéristiques directionnelles et/ou d'orientation.

9. Pulvérisateur de champ selon l'une des revendications 5 à 8, dans lequel la zone d'extension gauche/droite (11) couverte par les buses de pulvérisation (10) a une largeur de 0,2 à 0,8 m, en particulier de 0,4 à 0,6 m.
